# EUROPÄISCHE PATENTANMELDUNG

(11) **EP 0 695 495 A1**
(43) Veröffentlichungstag der Anmeldung: **07.02.1996**
(21) Anmeldenummer: 95110384.5
(22) Anmeldetag: 04.07.1995
(51) Int. Cl.: A01B 49/02, A01B 49/06, A01B 63/11

(54) **Bodenbearbeitungskombination**

(30) Priorität: 16.07.1994 DE 9411571 U
(71) Anmelder: Rabewerk GmbH + Co., D-49152 Bad Essen (DE)
(72) Erfinder: Warnking, Richard, D-49152 Bad Essen (DE)
(74) Vertreter: Missling, Arne, Dipl.-Ing.

(57) **Zusammenfassung**

Bei Bodenbearbeitungskombinationen mit einem Anbaugestänge mit Anschlußmitteln für den Anschluß an ein Dreipunktgestänge oder eine Ackerschiene eines Schleppers, mit mindestens einem am Anbaugestänge (16) höhenbeweglich angeschlossenen Bodenbearbeitungsgerät (1), das bzw. die über ein Tiefenführungsgerät (2), z.B. eine Stützwalze, gegenüber dem Boden abgestützt ist/sind, wobei zumindest ein Federspeicher (10) zwischen dem Anbaugestänge (16) und dem bzw. den gegenüber diesen höhenbeweglichen Bodenbearbeitungsgeräten (1) eingeschaltet ist, wird, um die Last des Bodenbearbeitungsgerätes und/oder der Sämaschine und/oder der weiteren Arbeitsgeräte zumindest teilweise von der Stützwalze weg auf die Hinterachse des Schleppers zu verlagern und wobei gleichzeitig eine Sicherung gegen Bodenhindernisse wirksam ist,
a) das Angebaustänge (16) in der Arbeitsstellung der Bodenbearbeitungskombination (1) höhenunbeweglich am Schlepper anschließbar ausgebildet,
b) das/die gegenüber dem Boden von dem Tiefenführungsgerät (2) abgestützten Bodenbearbeitungsgeräte (1) in der Arbeitsstellung am Anbaugestänge (16) frei höhenbeweglich angeschlossen und
c) die Vorspannung zumindest einer der Federspeicher (10) einstellbar ausgebildet.

## Beschreibung

Die Erfindung betrifft eine Bodenbearbeitungskombination mit einem Anbaugestänge (16) mit Anschlußmitteln für den Anschluß an ein Dreipunktgestänge oder eine Ackerschiene eines Schleppers, mit mindestens einem am Anbaugestänge (16) höhenbeweglich angeschlossenen Bodenbearbeitungsgerät (1), das bzw. die über ein Tiefenführungsgerät (2), z. B. eine Stützwalze, gegenüber dem Boden abgestützt ist/sind, wobei zumindest ein Federspeicher (10) zwischen dem Anbaugestänge (16) und dem bzw. den gegenüber diesen höhenbeweglichen Bodenbearbeitungsgeräten (1) eingeschaltet ist.

Derartige Bodenbearbeitungskombinationen sind seit langem bekannt und in vielfältiger Ausgestaltung im Einsatz. Die teilweise erheblichen Lasten des Bodenbearbeitungsgerätes, beispielsweise einer Kreiselegge mit einer Vielzahl von rotierenden Bodenbearbeitungswerkzeugen, und der Sämaschine, die in der Regel auch einen mit Saatgut gefüllten Saatgutbehälter umfaßt, werden dabei über die Stützwalze auf den Ackerboden übertragen. Man kann zwar durch einen vorderfrontseitigen Anbau des Saatgutbehälters am Schlepper wenigstens einen Teil der Lasten über die Achsen des Schleppers auf den Ackerboden übertragen, muß dann aber das Saatgut zunächst (pneumatisch) zur Rückfront des Schleppers fördern, um es in das von den Bodenbearbeitungswerkzeugen vorbereitete Saatbett ablegen zu können.

Bei schleppergezogenen Drehpflügen ist es aus den Firmendruckschriften "Rabewerk: Drehpflug 'Taube'" und "Rabewerk Dreipunkt-Winkeldrehpflüge" bereits bekannt, eine zu geringe Belastung der Hinterachse des Schleppers und damit eine ungenügende Haftreibung der zugehörigen Hinterräder dadurch zu vermeiden, daß das Eigengewicht und die senkrecht gerichtete Bodendruckkraft des Drehpfluges wenigstens teilweise der Hinterachse aufgeschaltet wird; zu diesem Zweck ist die Rückfront des Schleppers direkt durch einen Zugfeder-Ketten-Strang mit dem Pflugvordergestell verbunden. In der DE-Patentschrift 1 115 074 ist gezeigt, daß eine derartige Zugfeder auch zwischen dem Oberlenker eines Dreipunktanschlusses und dem Pflugvordergestell angeordnet sein kann, so daß wiederum ein Teil der Gesamtlast auf die Hinterachse des Schleppers geleitet und das Stützrad entlastet wird.

Aus der DE-Auslegeschrift 1 039 277 ist es ferner bereits bekannt, bei einer an einem Schlepper angebauten oder von diesem gezogenen Bodenfräse die dort als nachlaufendes Gleitbrett ausgebildete Höhenführung dadurch zu entlasten, daß beim Absenken der Bodenfräse aus der Transport- in die Arbeitsstellung eine Feder gespannt wird, welche die Bodenfräse mit dem "feststehenden" Teil der Maschine verbindet; bei der gezogenen Bodenfräse ist das der Schlepper selbst. Die Vorspannung der Feder ist in diesem Falle deshalb davon abhängig, in welcher Höhe über dem Ackerboden die Unterlenker an dem Schlepper vorgesehen sind. Ein solcher schlepper-abhängiger Einfluß auf die Entlastung der Höhenführung erfordert in der Regel eine jeweils mit nur einem bestimmten Schlepper zusammenpassende Bodenfräse oder eine umständliche, einem Betreiber nicht zumutbare Anpassung des Energiespeichers, wenn ein anderer Schlepper verwendet wird.

In der EP-A2-0 359 896 ist eine aus einem Schlepper und einem von diesem mittels eines Dreipunktanschlusses gezogenen und von einer stützwalze höhengeführten, an den an dem Schlepper schwenkbaren Unterlenkern und dem Oberlenker des Dreipunktanschlusses mittels eines Tragturmes befestigten Bodenbeabeitungsgerät bestehende Bodenbearbeitungskombination beschrieben, bei der das Bodenbearbeitungsgerät gegen die Federkraft einer an dem Tragturm befestigten Feder höhenbeweglich gehalten ist. Die Feder hat dabei die Aufgabe, das Anheben des Bodenbearbeitungsgerätes in die Transportstellung dadurch zu erleichtern, daß die Anhebekraft nicht ruckartig aufgebracht wird. Im übrigen ist die Arbeitsstellung der Kreiselegge relativ zum Anbaugestänge an dem das Dreipunktgestänge des Schleppers angreift durch Anschläge festgelegt. Eine Entlastung der Stützwalze zu Lasten der Hinterachse des Schleppers findet dabei nicht statt. Diese aus der EP-A2-0 359 896 bekannte Gerätekombination läßt sich nur in Schwimmstellung des Schlepper-Dreipunktgestänges betreiben.

Es ist auch bereits - beispielsweise aus dem DE-Gebrauchsmuster 93 05 276 U1 - bekannt, zwischen der Stützwalze und dem Bodenbearbeitungsgerät eine Feder so vorzusehen, daß das Bodenbearbeitungsgerät beim Auftreffen auf ein Bodenhindernis gegen die Kraft dieser Feder ausweichen kann. Diese Feder ist für die Verbindung des Bodengerätes zum Schlepper hin unwirksam und kann deshalb ebenfalls nicht zur Entlastung der Stützwalzen beitragen.

Die Erfindung hat sich deshalb die Aufgabe gestellt, eine Bodenbearbeitungskombination der eingangs näher beschriebenen Art so auszubilden, daß die Last des Bodenbearbeitungsgerätes und/oder der Sämaschine und/oder der weiteren Arbeitsgeräte zumindest teilweise von der Stützwalze weg auf die Hinterachse des Schleppers verlagert wird, und daß dabei gleichzeitig eine Sicherung gegen Bodenhindernisse wirksam ist.

Erfindungsgemäß wird die Aufgabe dadurch gelöst, daß das Anbaugestänge (16) in der Arbeitsstellung der Bodenbearbeitungskombination (1) höhenunbeweglich am Schlepper anschließbar ist, daß die gegenüber dem Boden von dem Tiefenführungsgerät (2) abgestützten Bodenbearbeitungsgeräte (1) in der Arbeitsstellung am Anbaugestänge (16) frei höhenbeweglich angeschlossen sind und daß die Vorspannung zumindest einer der Federspeicher (10) einstellbar ist.

Weitere Merkmale der Erfindung enthalten die Unteransprüche.

Durch die Erfindung werden die oben beschriebenen Nachteile des Standes der Technik auf überraschend einfache Weise beseitigt. Der Verzicht auf frei bewegliche Unterlenker oder der Anlenkung an eine Ackerschiene und die Verlegung der Höhenbeweglichkeit allein auf das Bodenbearbeitungsgerät sorgt dafür, daß deren Gewicht und das Gewicht aller anderen Arbeitsgeräte in wählbarer Größenordnung von der Stützwalze auf die Hinterachse des Schleppers verlagert wird. Man kann dabei außerdem durch die Verstellbarkeit der Vorspannungen der beteiligten Federn die Belastung des Ackerbodens durch die Stützwalze den jeweiligen Bodenverhältnissen anpassen und vermeiden, daß eine unerwünscht hohe Verdichtung eintritt. Gleichzeitig wird die Haftreibung der Hinterräder des Schleppers wesentlich erhöht; die dabei unvermeidliche höhere Verdichtung des Ackerbodens ist ohne Folgen, weil anschließend der Boden sofort wieder aufgebrochen wird. Dabei ist es möglich, die Belastung der Kreiseleggen des Bodenbearbeitungsgerätes durch einen vorlaufenden Bodenlockerer oder dergleichen zu vermindern.

Besonders bei feuchten Ackerböden kann nun die Saatbettbereitung ebenfalls problemlos erfolgen, zumal die Belastung der Stützwalze frei wählbar ist.

Die Erfindung ermöglicht nach wie vor die Höhenführung des Bodenbearbeitungsgerätes durch die Stützwalze. Diese Höhenführung ist auch bevorzugt verstellbar ausgebildet, in bekannter Weise durch einen umsteckbaren Bolzen oder auch mittels eines höhenverstellbaren Anschlages. Um zu verhindern, daß die Auflagelast auf die Stützwalze völlig verschwindet und die Höhenführung gefährdet wird, kann erfindungsgemäß eine lagesensor-gesteuerte Einrichtung vorgesehen sein, die auch gleichzeitig die Arbeitshöhe zu verstellen gestattet. Eine solche Regelung und/oder mögliche Änderung der Führungsgröße bedeutet - über die eigentliche Aufgabenstellung der Erfindung weit hinausgehend - einmal einen erhöhten Bedienkomfort, und zum anderen erlaubt eine derartige Anordnung eine schnelle Anpassung an wechselnde Bodenverhältnisse während der Bodenbearbeitung.

Die erfindungsgemäße Anordnung kann so ausgeführt werden, daß an die Arbeitsgeräte der Bodenbearbeitungskombination keine speziellen konstruktiven Erfordernisse gestellt werden müssen, so daß die Erfindung durch einfaches Nachrüsten einer vorhandenen Einrichtung verwirklicht werden kann.

Die Erfindung wird nachstehend an Hand der Zeichnung näher erläutert. Es zeigen
- Fig. 1 bis Fig. 5: verschiedene Anordnungen eines ersten erfindungsgemäßen Ausführungsbeispiels,
- Fig. 6 bis Fig. 8: verschiedene Anordnungen eines zweiten erfindungsgemäßen Ausführungsbeispiels,
- Fig. 9 und Fig. 10: Ausführungsbeispiel zur Steuerung einer Höhenführung des Bodenbearbeitungsgerätes einer erfindunsgemäßen Bodenbearbeitungskombination und
- Fig. 11 bis Fig. 20: Anwendungsbeispiele der erfindungsgemäßen Anordnung,
sämtlich in Seitenansicht und in schematisch vereinfachter Darstellung.

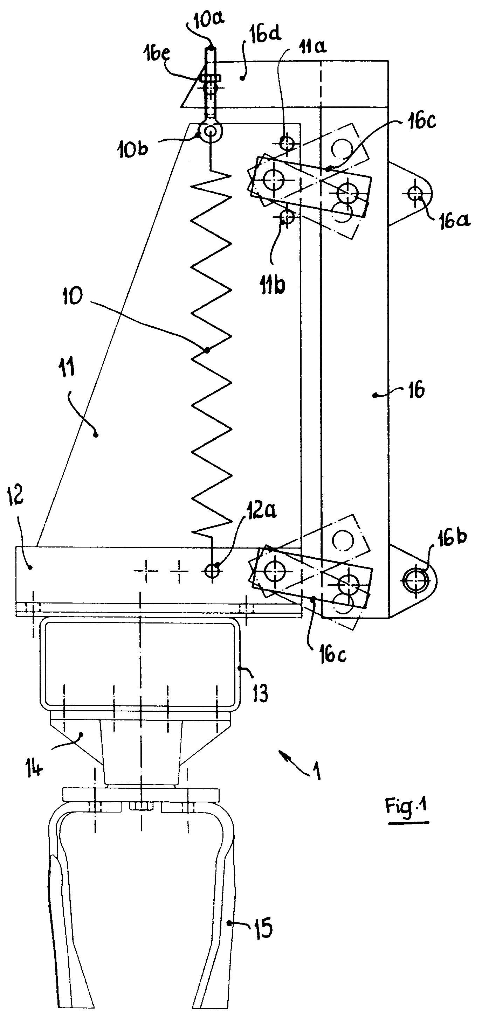

In der Fig. 1 ist zunächst ein Bodenbearbeitungsgerät 1 dargestellt, wie es für die erfindungsgemäße Ausbildung der Bodenbearbeitungskombination geeignet ist. Es besteht im wesentlichen aus einem Tragturm 11, der durch einen Rahmen 12 mit einem hohlbalkenförmigen Querbalken 13 verbunden ist. An dem Querbalken 13 befinden sich Werkzeughalter 14 für Bodenbearbeitungswerkzeuge, die hier als Zinkenkreisel 15 einer Kreiselegge ausgebildet sind. Die Zinkenkreisel 15 werden in bekannter Weise über ein in dem Querbalken 13 untergebrachtes, von dem Schlepper der Bodenbearbeitungskombination aus betätigtes Getriebe angetrieben. Die allgemein bekannten, fachüblichen Einzelheiten sind in der Zeichnung generell weggelassen.

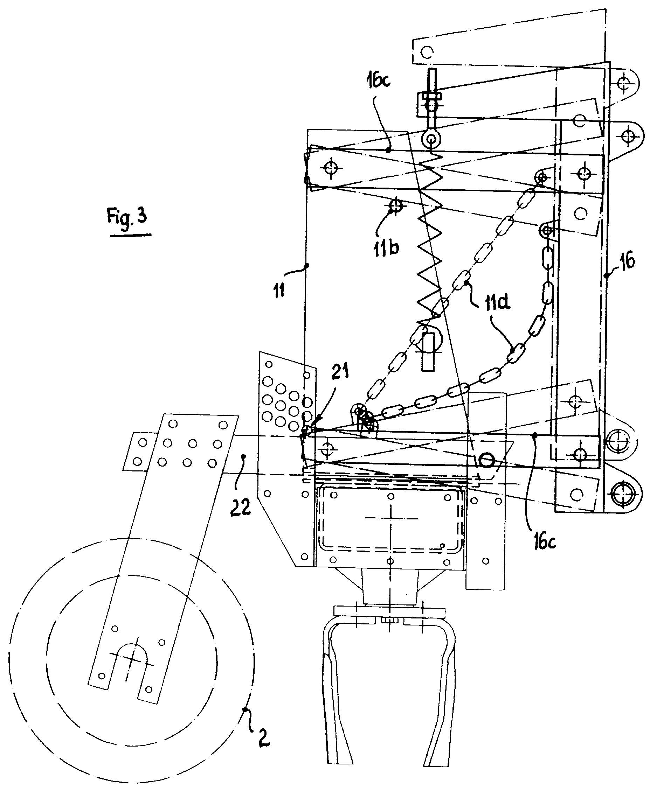

Ein Anbaugestänge 16 stellt die Verbindung zu dem in der Zeichnung nicht sichtbaren Schlepper her; er ist mit Anschlüssen versehen, die als Koppelgelenke 16a und 16b für einen Oberlenker und zwei Unterlenker eines Dreipunktanschlusses an dem Schlepper ausgebildet sind. Ein solcher Dreipunktanschluß ist bei derartigen Anordnungen die Regel, dem Fachmann geläufig und deshalb in der Zeichnung nicht ausgeführt. Wesentlich ist allerdings, daß entsprechend der Erfindung die Unterlenker so blockierbar sind, daß ihre freien, an den Koppelgelenken 16b angeschlossenen Enden als Auflager für das Bodenbearbeitungsgerät 1 dienen, das andererseits auf einer Stützwalze 2 (Fig. 3) abgestützt ist.

Das Anbaugestänge 16 ist mittels zweier paralleler Schwinghebel 16c mit dem Tragturm 11 wirkverbunden, so daß dieser senkrecht beweglich ist; sein Hub ist durch zwei Anschläge 11a und 11b begrenzt. Die Bewegung des Tragturmes 11 erfolgt unter der Wirkung eines als Feder 10 ausgebildeten Federspeichers. Die Feder 10 - hier eine Zugfeder - ist einerseits an einer Traverse 16d des Anbaugestänges 16, andererseits in einer Öse 12a des Rahmens 12 eingehängt. Die Vorspannkraft der Feder 10 ist einstellbar; dazu ist hier deren Befestigung an der Traverse 16d als Schraubstück ausgebildet, bei dem eine Schraubspindel 10a, an der eine Öse 10b für die Feder 10 vorgesehen ist, in einer an der Traverse 16d ortsfesten Gewindemutter 16e verstellbar ist.

In der Fig. 1 sind die den Anschlägen 11a und 11b zuordnenbaren Stellungen der Schwinghebel 16c strichpunktiert angedeutet, während eine den Arbeitsbereich verdeutlichende Mittellage ausgezogen gezeichnet ist. Dabei ist (wie auch in den folgenden Fig.) zu beachten, daß die Anlenkpunkte der Schwinghebel 16c in dem Anbaugestänge 16 höhenkonstant und diejenigen in dem Tragturm 11 höhenbeweglich sind; in der Zeichnung ist zur Vereinfachung der Gesamtdarstellung umgekehrt verfahren.

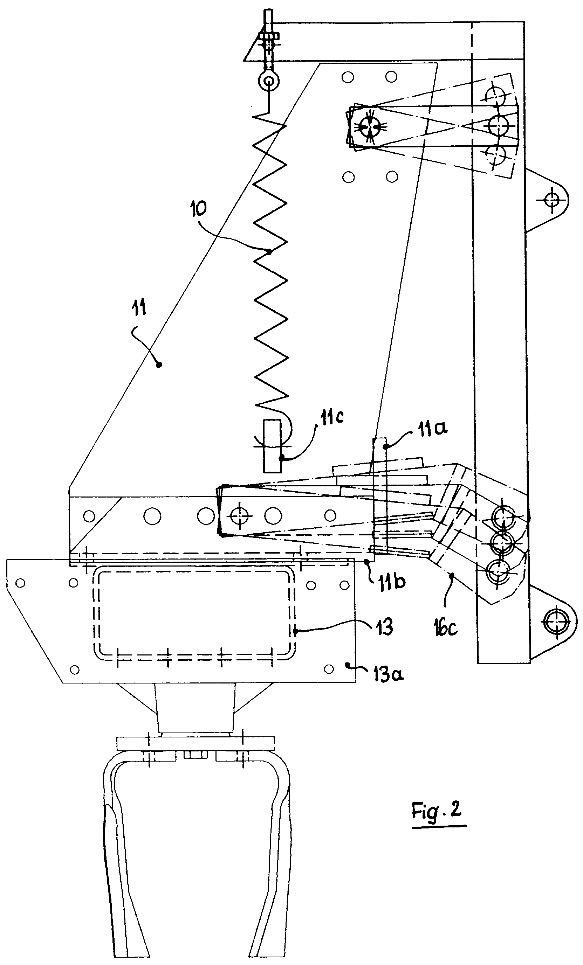

Die Ausführung der Fig. 2 entspricht im wesentlichen derjenigen der Fig. 1. Der Querbalken 13 ist hier stirnseitig von Seitenblechen 13a begrenzt. Die Anschläge 11a und 11b befinden an dem unteren der Schwinghebel 16c; der Anschlag 11a ist dabei hufeisenförmig nach unten offen, den Schwinghebel 16c überfangend ausgebildet, der Anschlag 11b hingegen als Anschlagplatte. Der untere Schwinghebel 16c ist den veränderten Bedingungen angepaßt und als Kniehebel ausgebildet. Die Feder 10 ist in einem an dem Tragturm 11 befestigten Haltestück 11c eingehängt.

In der Fig. 3 ist eine wiederum nur geringfügig veränderte Ausführung gezeigt, in der allerdings auch die Stützwalze 2 angegeben ist, die von dem Bodenbearbeitungsgerät 1 über - beispielsweise an dem Rahmen 12 - umsteckbare Bolzen 21 belastet wird, die an einen Träger 22 für die Stützwalze 2 anschlagen. Eine solche Halteverbindung ist fachüblich; in der Zeichnung ist sie deshalb nur angedeutet, und auf eine ausführliche Erläuterung kann verzichtet werden.

Die Schwinghebel 16c sind hier verlängert und in der Nähe der Rückfront des Tragturmes 11 beweglich gelagert, so daß an dem unteren der Schwinghebel 16c eine Kette 11d anhängbar ist, die andererseits in dem Anbaugestänge 16 so befestigt ist, daß sie in gestrafftem Zustand den oberen Anschlag 11a ersetzt, so daß nur mehr ein fester (unterer) Anschlag 11b verbleibt.

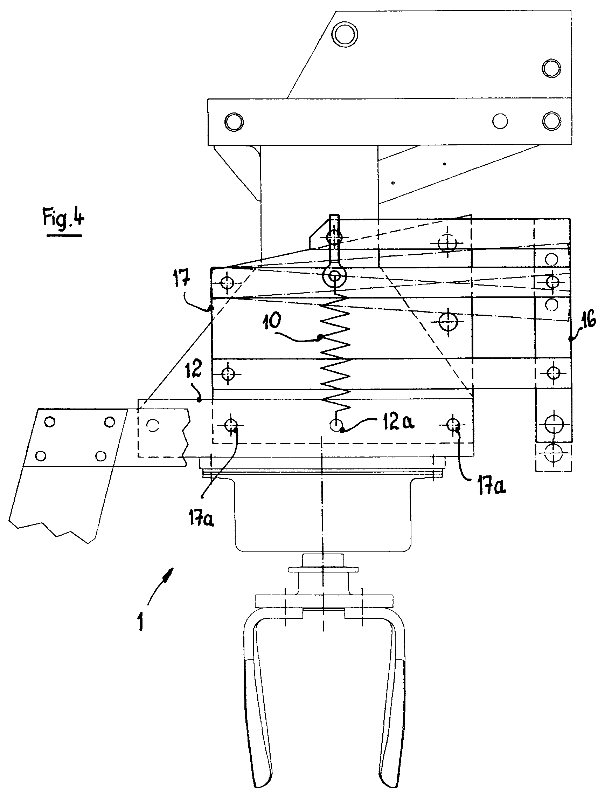

Eine besonders leichte Anpassung eines bereits vorhandenen Bodenbearbeitungsgerätes 1 ist mit Hilfe einer Anordnung entsprechend Fig. 4 möglich. Dort sind alle für die erfindungsgemäße Funktion wesentlichen Bauelemente gemeinsam auf einer Anbauplatte 17 vorgesehen, die mit dem Anbaugestänge 16 vormontierbar ist und an der das reine Bodenbearbeitungsgerät 1 z. B. mittels Schraubverbindungen 17a befestigt ist. Es ist hierbei in Übereinstimmung mit der Anordnung der Fig. 1 lediglich erforderlich, eine Öse 12a an dem Rahmen 12 vorzusehen, um die Feder 10 einhängen zu können.

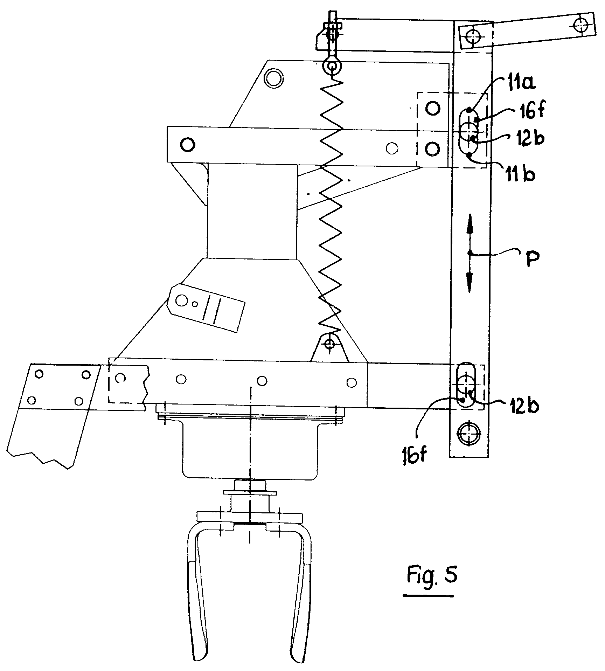

In der Anordnung der Fig. 5 sind keine Schwinghebel 16c vorgesehen; stattdessen wird die senkrechte Beweglichkeit durch Führungsbolzen 12b ermöglicht, die in (senkrechten) Langlöchern 16f des Anbaugestänges 16 zwischen zwei Anschlägen 11a,11b höhenbeweglich sind; ein Richtungspfeil P verdeutlicht die mögliche Bewegung.

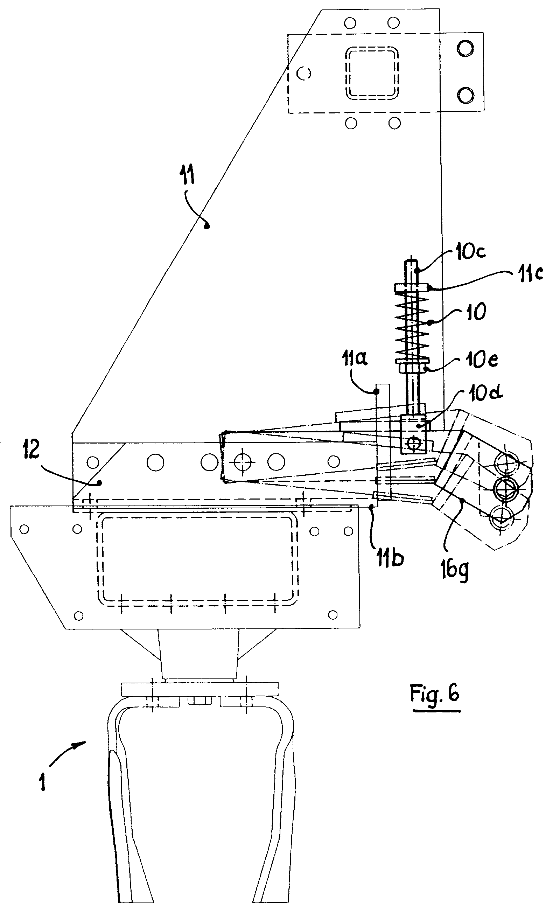

Bei den Ausführungen der Fig. 6 bis 8 sind der (höhenbewegliche) Oberlenker direkt und die Unterlenker indirekt über einen Schwenkhebel 16g mit dem Tragturm 11 bzw. dem Rahmen 12 verbunden, so daß das Bodenbearbeitungsgerät 1 schwenkbar höhenbeweglich ist. Die Anordnung kann so bemessen werden, daß die Höhenbewegung nahezu senkrecht verläuft. Der Schwenkhebel 16g entspricht dem unteren Schwinghebel 16c der Anordnung nach der Fig. 2 und ist zwischen übereinstimmend ausgeführten Anschlägen 11a und 11b bewegbar. Allerdings stützt sich die Feder 10 nunmehr an dem Tragturm 11 ab und belastet den Schwenkhebel 16g.

In der Gestaltung des durch die Feder 10 verkörperten Energiespeichers unterscheiden sich die Ausführungen der Fig. 6 bis 8 voneinander. Die Anordnung der Fig. 6 beschränkt sich auf eine einfache Druckfeder mit veränderbarer Vorspannkraft. Eine Führungsspindel 10c ist einerseits über das Haltestück 11c mit dem Tragturm 11 und andererseits über eine Einspannung 10d gelenkig mit dem Schwenkhebel 16g verbunden. Die Einspannlänge der Feder 10 ist durch eine Verstellmutter 10e veränderbar.

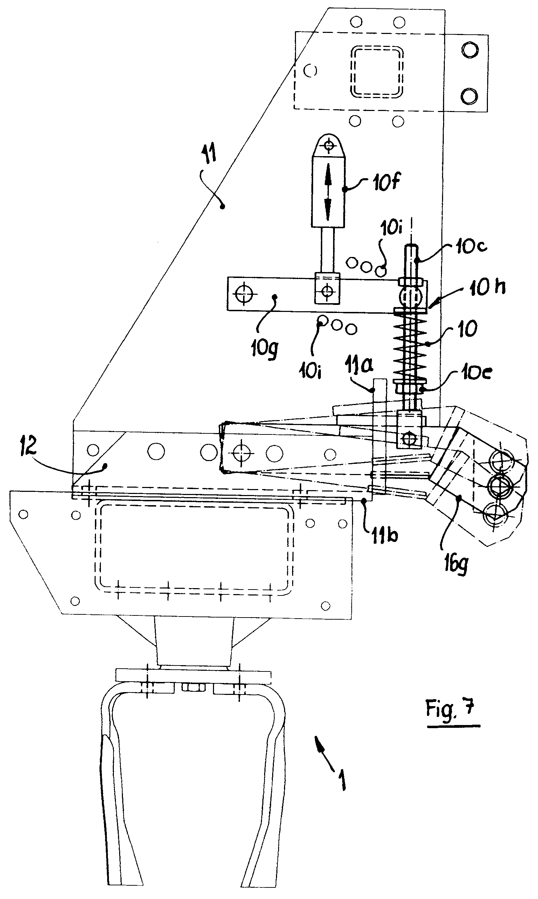

Eine leicht veränderte Ausgestaltung zeigt die Fig. 7, in der bei der sonst mit Fig. 6 übereinstimmenden Anordnung die Einspannlänge und damit die Vorspannkraft der Feder 10 mittels eines an dem Tragturm 11 gelenkig gelagerten Hydraulikzylinders 10f verstellbar ist, der über einen in gleicher Weise gelagerten einarmigen Stellhebel 10g einen auf der Führungsspindel 10c entgegengesetzt der Verstellmutter 10e vorgesehenen Federanschlag 10h auf der Führungsspindel 10c verschieben kann. Die Verschwenkbarkeit des Stellhebels 10g ist durch - verstellbare - Anschläge 10i, hier als Einsteckbolzen ausgebildet, in seinen beiden Schwenkrichtungen begrenzt.

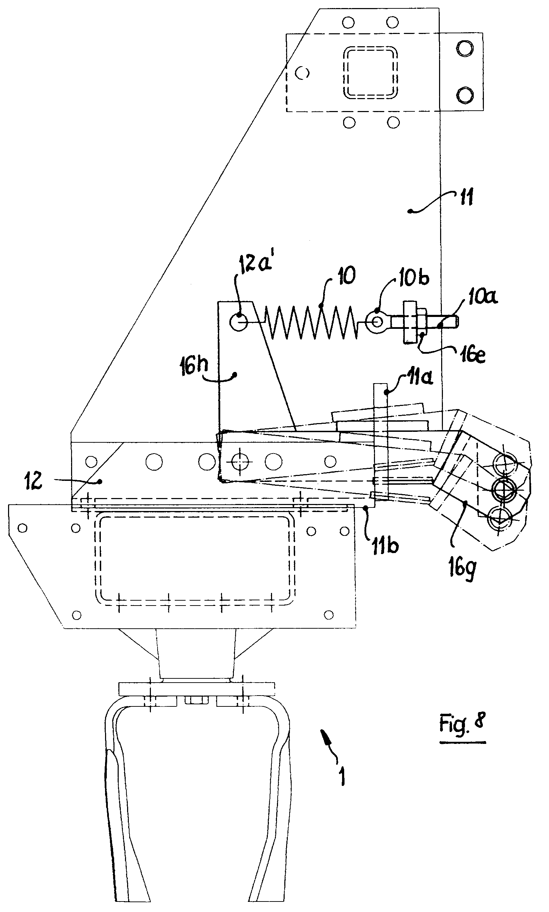

Bei dieser Ausführung ohne als Anbaubock ausgebildetes Anbaugestänge 16 kann die Feder 10 auch als Zugfeder ausgebildet sein; dies zeigt die Fig. 8. Anstelle einer Einspannung 10d befindet sich an dem Schwenkhebel 16g ein Hebelstück 16h mit einer Öse 12a' zum Einhängen der Feder 10, die im übrigen genauso ausgebildet ist wie in der oben beschrieben Anordnung der Fig. 1, jedoch andererseits nunmehr an dem Tragturm 11 befestigt ist. Die Schwenkbarkeit des Bodenbearbeitungsgerätes 1 erlaubt es hier, daß die Feder platzsparend waagerecht vorgesehen werden kann.

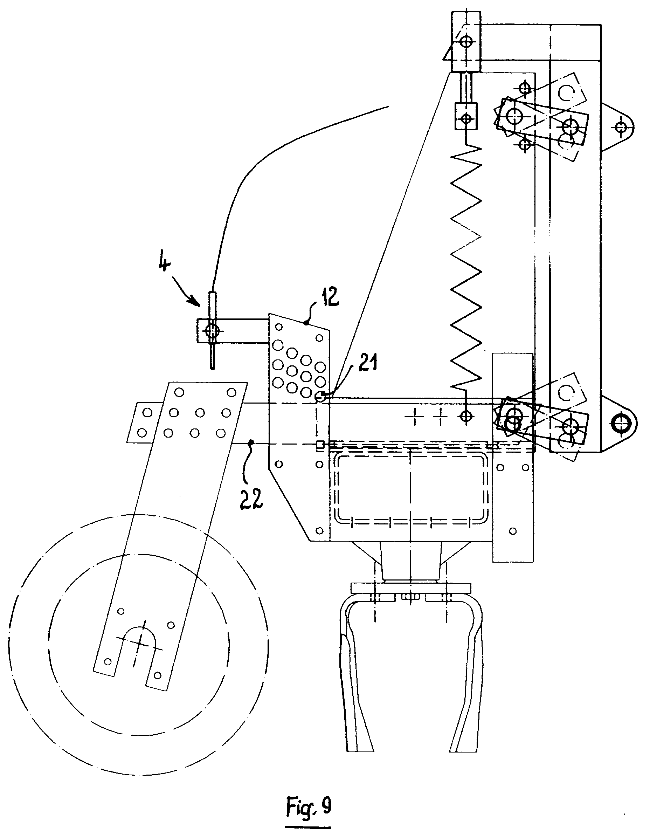

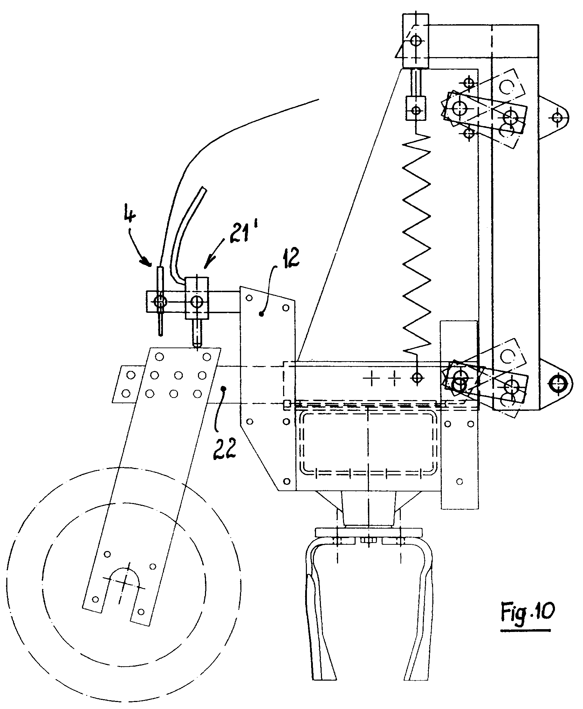

Die erfindungsgemäße Bodenbearbeitungskombination läßt es zu, daß die Stützwalze 2 in an sich beliebiger Größenordnung von dem Gewicht der Arbeitsgeräte der Bodenbearbeitungskombination befreit werden kann. Dabei muß aber eine gewisse Mindestlast erhalten bleiben, um eine einwandfreie Höhenführung des Bodenbearbeitungsgerätes 1 wie auch die erforderliche Saatbettverdichtung und -einebnung zu gewährleisten. Zu diesem Zweck ist in den Ausführungen der Fig. 9 und 10 jeweils ein Lagesensor 4 eingesetzt, der, an dem Rahmen 12 befestigt, signalisiert, wenn der Bolzen 21 nicht mehr auf dem Träger 22 aufliegt (Fig. 9). Entsprechend Fig. 10 kann ein einfacher Regelkreis installiert werden, wenn der Bolzen 21 durch einen hydraulischen Stellkolben 21' ersetzt wird, weil dann auch die Größe der auf dem Träger 22 ruhenden Last regelbar ist, wenn der Druck in dem Stellkolben 21' als Meßsignal verwendet und verarbeitet wird. Eine zusätzliche Verwendung eines Hydraulikzylinders am Anbaugestänge für die Einstellung der Federvorspannung wäre besonders vorteilhaft.

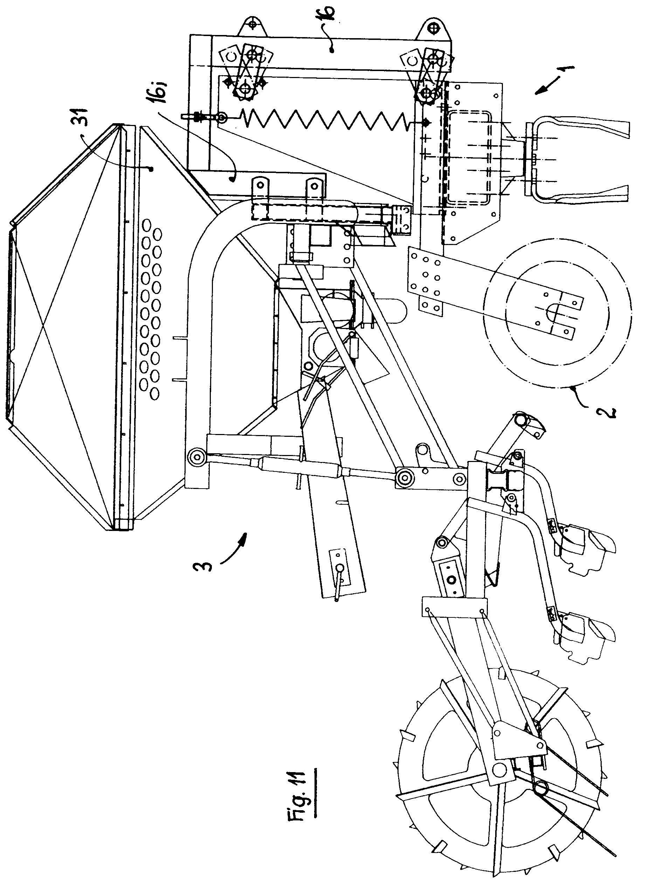

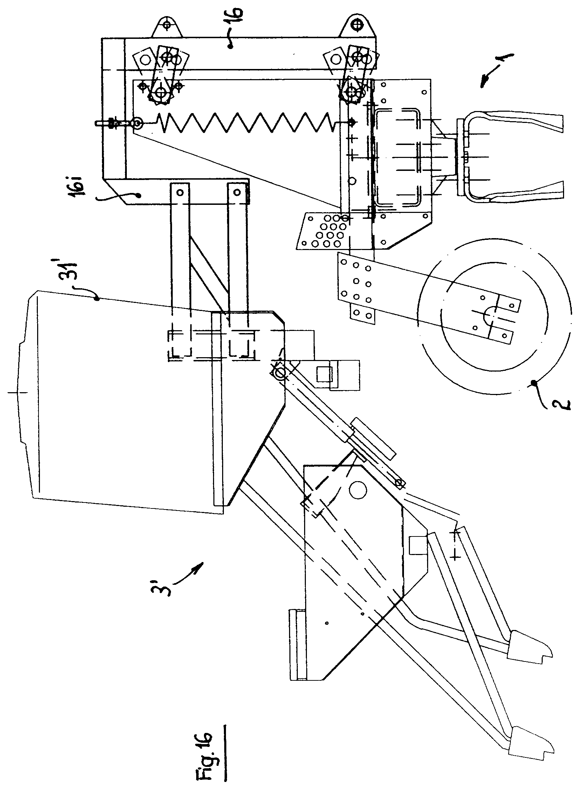

Die Fig. 11 bis 20 zeigen Anwendungen der erfindungsgemäßen Anordnung bei Bodenbearbeitungskombinationen, die mit einer pneumatischen (Fig. 11 bis 15) oder mechanischen (Fig. 16 bis 20) Sämaschine ausgerüstet sind.

Die pneumatische Sämaschine 3 entsprechend Fig. 11 und die mechanische Sämaschine 3' entsprechend Fig. 16 sind jeweils unabhängig von dem Bodenbearbeitungsgerät 1 und unmittelbar mit einem Träger 16i des Anbaugestänges 16 verbunden, so daß sie die Stützwalze 2 von vornherein nicht belasten können. Die Gesamtlast der Sämaschine 3,3' und insbesondere des zugehörigen Saatgutbehälters 31,31' wird demzufolge stattdessen über die Unterlenker des Schleppers unmittelbar auf dessen Hinterachse gelegt.

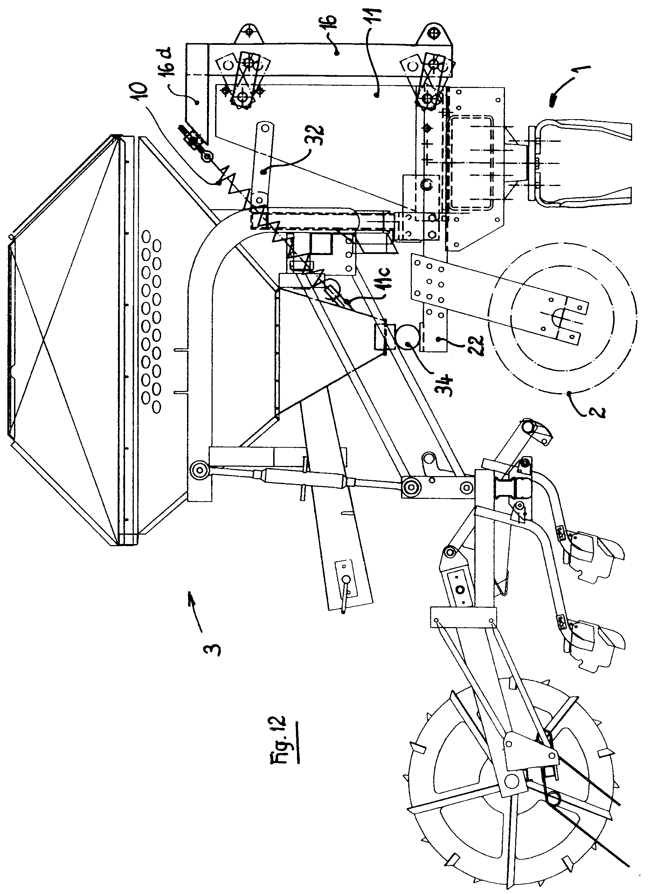

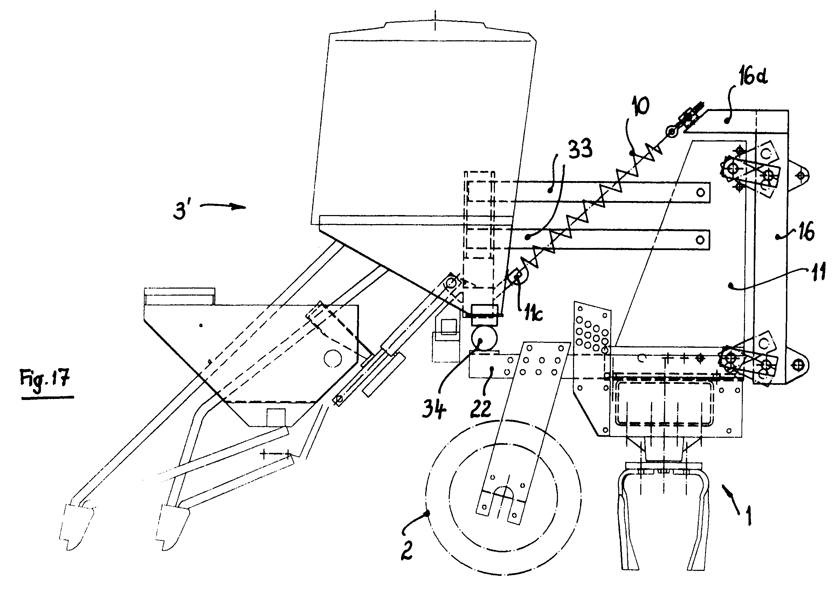

In den Anordnungen der Fig. 12 und 17 hingegen sind die Sämaschinen 3,3' an dem am Anbaugestänge 16 höhenbeweglichen Teil des Bodenbearbeitungsgerätes 1 befestigt, entweder (Fig. 12) mittels eines Koppelrahmens 32 an dem Tragturm 11 und dem Rahmen 12 oder (Fig. 17) durch (hier parallele) Halteriegel 33 an dem Tragturm 11. Das Haltestück 11c für die wiederum als Zugfeder ausgebildete, für den Kraftverlauf günstigerweise diagonal angeordnete Feder 10, die nach wie vor andererseits in der Traverse 16d gehaltert ist, befindet sich an dem Saatgutbehälter 31,31', obwohl es selbstverständlich auch nach wie vor direkt an dem Tragturm 11 vorgesehen sein kann. Die gesamte Last der Sämaschine 3,3' und des Bodenbearbeitungsgerätes 1 ist an einer jeweiligen, den Träger 22 beständig belastenden Auflage 34 der Stützwalze 2 aufgesattelt; bei Bodenhindernissen weicht die Gesamtanordnung 1,3 bzw. 1,3' nach oben aus.

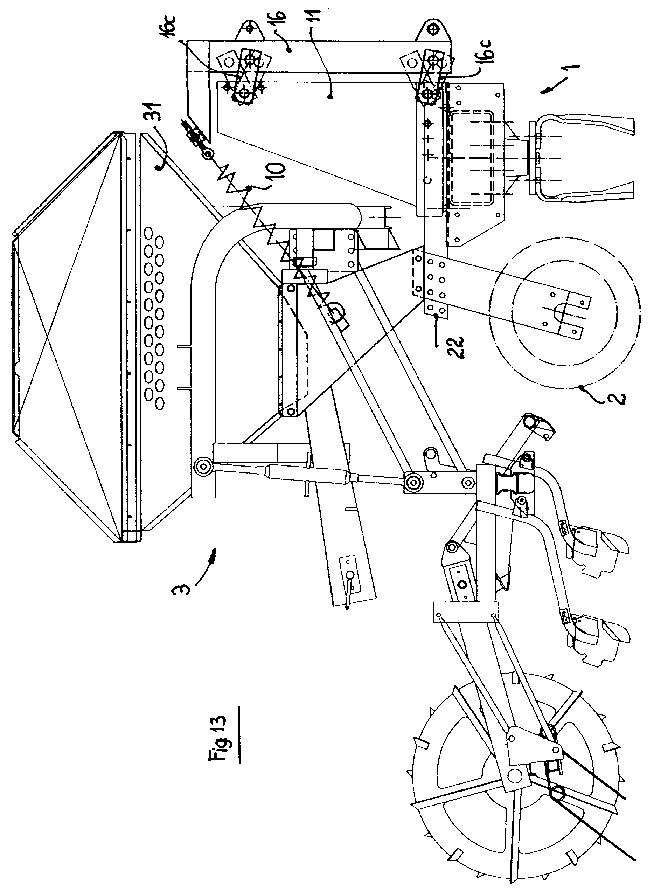

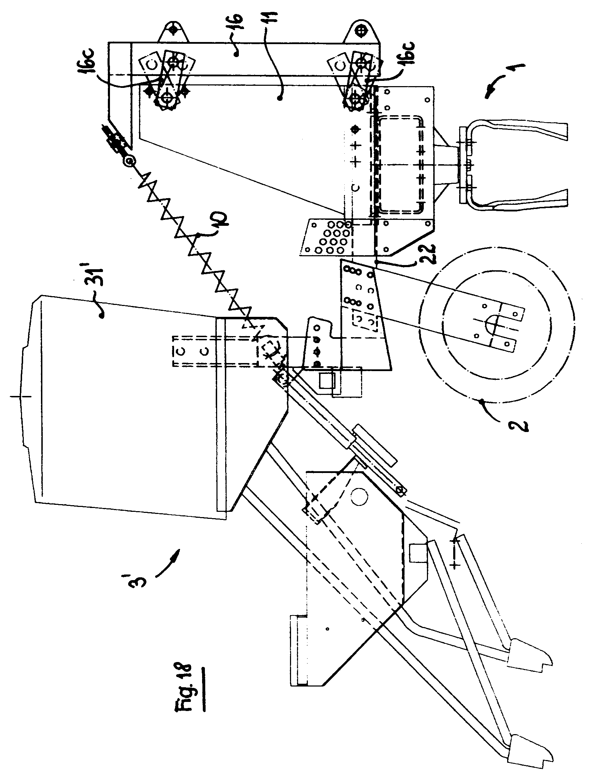

Man kann davon ausgehen, daß die abzustützende Last zum großen Teil auf die Sämaschine 3,3' entfällt. Es ist deshalb auch denkbar, nur deren Gewicht auf die Unterlenker aufzuschalten. In den Fig. 13 und 18 sind entsprechende Anordnungen gezeigt, in denen die Sämaschinen 3,3' unmittelbar an dem Träger 22 der Stützwalze 2 befestigt und der Tragturm 11 einschließlich des gesamten Bodenbearbeitungsgerätes 1 unabhängig und ohne Entlastung durch die Feder 10 an dem Anbaugestänge 16 angehängt ist, nach wie vor durch die Schwinghebel 16c höhenbeweglich, um Bodenhindernissen nach oben ausweichen zu können; die Feder 10 ist nach wie vor als Zugfeder ausgebildet und zwischen dem Anbaugestänge 16 und dem Saatgutbehälter 31,31' vorgesehen. Entlastet wird bei diesem Ausführungsbeispiel somit auch die Stützwalze 2 von ihrem eigenen Gewicht.

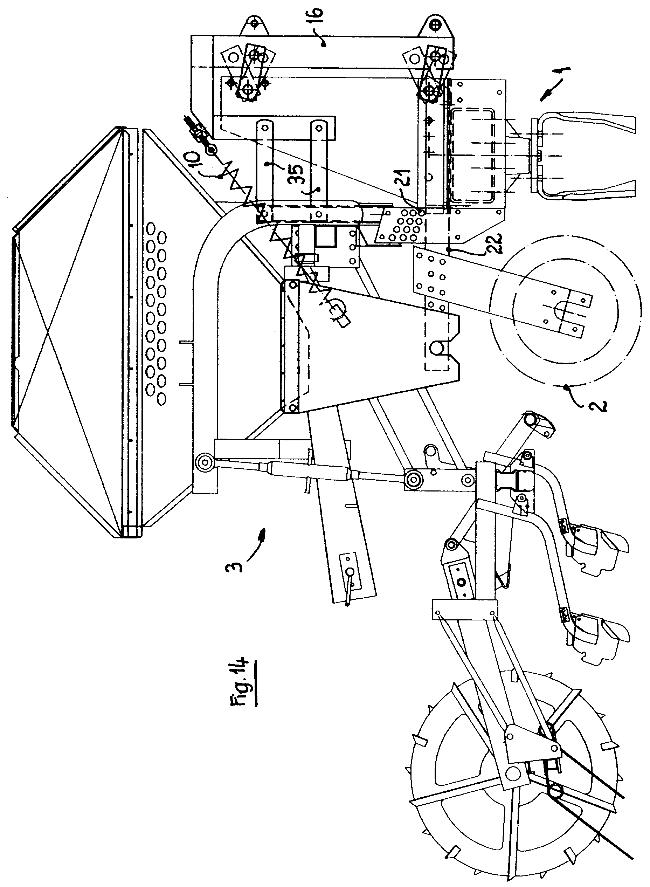

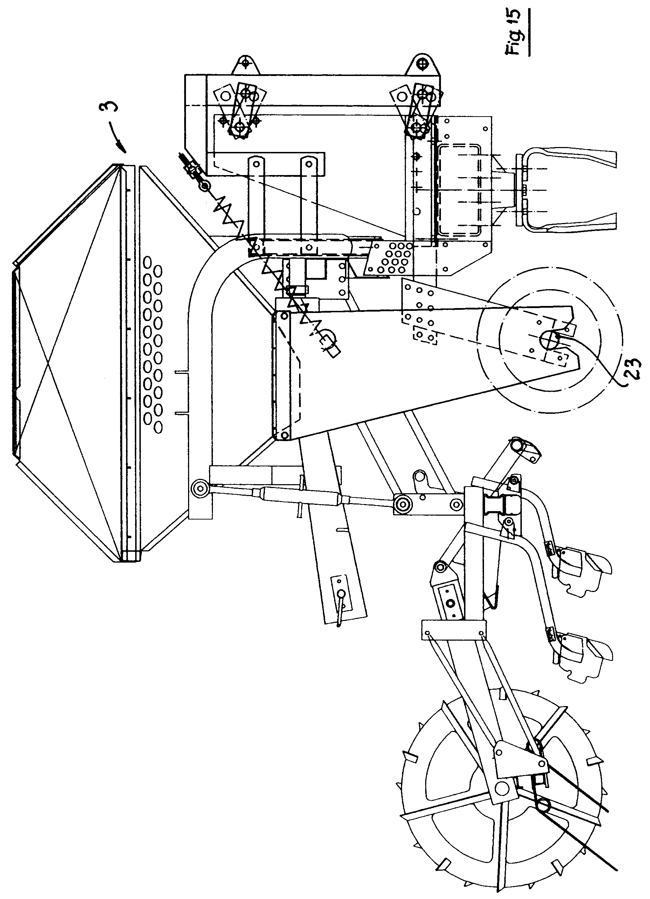

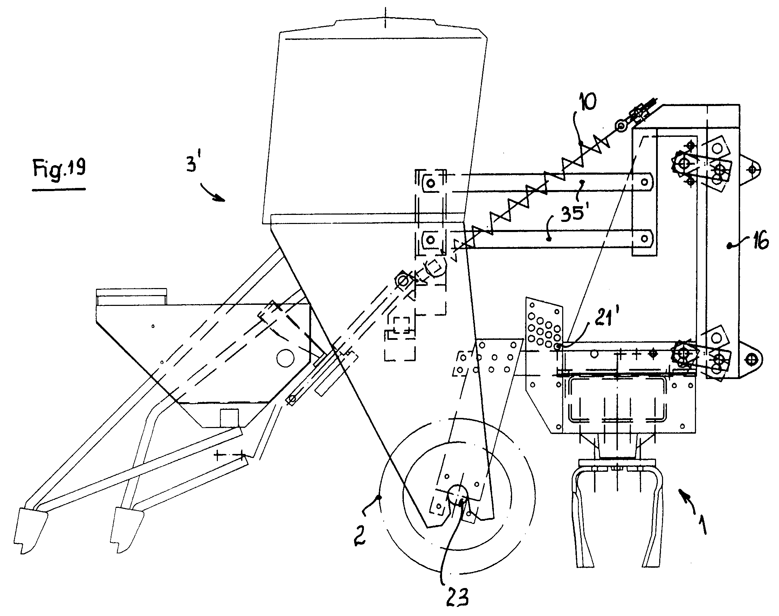

Schließlich kann man auf die Entlastung der Stützwalze 2 von dem Bodenbearbeitungsgerät 1 verzichten und gleichwohl deren sichere Höhenführung gewährleisten. Zu diesem Zweck schließt man entsprechend Fig. 14 und 19 die jeweilige Sämaschine 3,3' durch parallele Lenker 35,35' höhenbeweglich an dem Anbaugestänge 16 an und stützt sie ansonsten an der Stützwalze 2 gegen die Wirkung der Feder 10 ab, entweder (Fig. 14) auf dem Träger 22 oder (Fig. 19) auf der Achse 23 der Stützwalze 2. Das Bodenbearbeitungsgerät 1 wird bei diesen Ausführungen in der oben ausführlich beschriebenen Weise durch die anliegenden Bolzen 21,21' höhengeführt. Wie in Fig. 15 dargelegt, ist die Abstützung an der Achse 23 auch bei einer pneumatischen Sämaschine 3 möglich

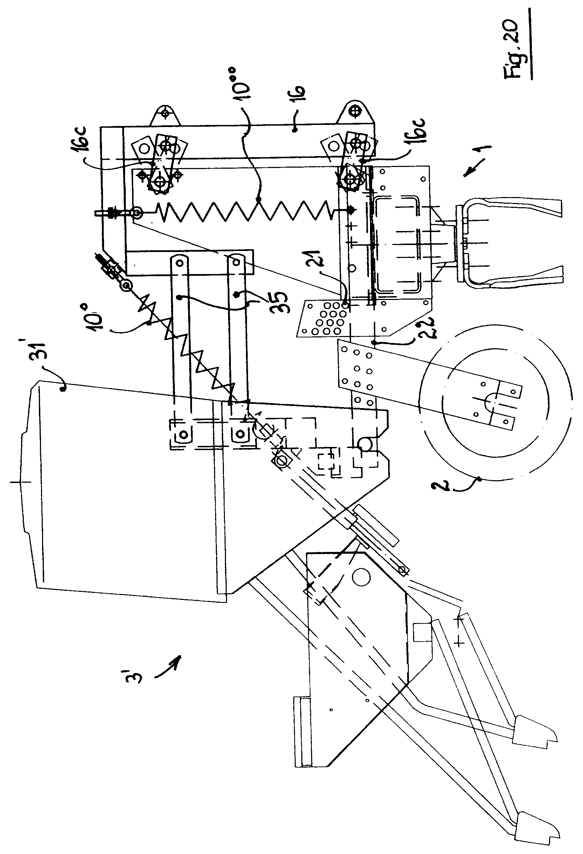

An dem Beispiel einer mechanischen Sämaschine 3' soll noch gezeigt werden, daß diese und das Bodenbearbeitungsgerät 1 auch unabhängig voneinander einzeln entlastet werden können, wie das in der Fig. 20 gezeigt ist. Anstelle einer einzelnen Feder 10 sind hier jeweils eine gesonderte Feder 10° und 10°° für die Sämaschine 3' und das Bodenbearbeitungsgerät 1 vorgesehen, beide mit einstellbarer Vorspannkraft ausgeführt und an dem Anbaugestänge 16 befestigt. Sowohl die Sämaschine 3' (an dem Saatgutbehälter 31') als auch das Bodenbearbeitungsgerät 1 (mit dem Bolzen 21) belasten den Träger 22 der Stützwalze 2 unmittelbar. Das Bodenbearbeitungsgerät 1 ist durch die Schwinghebel 16c, die Sämaschine 3' durch die Lenker 35,35' höhenbeweglich an dem Anbaugestänge 16 angeschlossen.

Es versteht sich, daß in allen Anordnungen, in den die Höhenbeweglichkeit des Bodenbearbeitungsgerätes 1 nicht explizit angegeben ist, die dafür oben beschriebenen Möglichkeiten anwendbar sind. In fast allen Ausführungen läßt es sich auch einrichten, daß die Beweglichkeit des Tragturmes 11 oder des Rahmens 12 durch Anschlagen an dem Anbaugestänge 16 eingeschränkt ist, so daß gesonderte Anschläge nicht erforderlich sind.

### Aufstellung der Bezugszeichen

- 1: Bodenbearbeitungsgerät
- 10,10°,10°°: Federspeicher, Feder
- 10a: Schraubspindel
- 10b: Öse
- 10c: Führungsspindel
- 10d: Einspannung
- 10e: Verstellmutter
- 10f: Hydraulikzylinder
- 10g: Stellhebel
- 10h: Federanschlag
- 10i: Anschlag
- 11: Tragturm
- 11a,11b: Anschlag
- 11c: Haltestück
- 11d: Kette
- 12: Rahmen
- 12a,12a': Öse
- 12b: Führungsbolzen
- 13: Querbalken
- 13a: Seitenblech
- 14: Werkzeughalter
- 15: Zinkenkreisel
- 16: Anbaugestänge
- 16a,16b: Koppelgelenk
- 16c: Schwinghebel
- 16d: Traverse
- 16e: Gewindemutter
- 16f: Langloch
- 16g: Schwenkhebel
- 16h: Hebelstück
- 16i: Träger
- 17: Anbauplatte
- 17a: Schraubverbindung
- 2: Stützwalze
- 21: Bolzen
- 21': Stellkolben
- 22: Träger
- 23: Achse
- 3,3': Sämaschine
- 31,31: Saatgutbehälter
- 32: Koppelrahmen
- 33: Halteriegel
- 34: Auflage
- 35,35': Lenker
- 4: Lagesensor
- P: Richtungspfeil

## Patentansprüche

1. Bodenbearbeitungskombination mit einem Anbaugestänge (16) mit Anschlußmitteln für den Anschluß an ein Dreipunktgestänge oder eine Ackerschiene eines Schleppers, mit mindestens einem am Anbaugestänge (16) höhenbeweglich angeschlossenen Bodenbearbeitungsgerät (1), das bzw. die über ein Tiefenführungsgerät (2), z. B. eine Stützwalze, gegenüber dem Boden abgestützt ist/sind, wobei zumindest ein Federspeicher (10) zwischen dem Anbaugestänge (16) und dem bzw. den gegenüber diesen höhenbeweglichen Bodenbearbeitungsgeräten (1) eingeschaltet ist, dadurch gekennzeichnet, daß
a) das Anbaugestänge (16) in der Arbeitsstellung der Bodenbearbeitungskombination (1) höhenunbeweglich am Schlepper anschließbar ist, daß
b) das/die gegenüber dem Boden von dem Tiefenführungsgerät (2) abgestützten Bodenbearbeitungsgeräte (1) in der Arbeitsstellung am Anbaugestänge (16) frei höhenbeweglich angeschlossen sind und daß
c) die Vorspannung zumindest einer der Federspeicher (10) einstellbar ist.

2. Bodenbearbeitungskombination nach Anspruch 1, dadurch gekennzeichnet, daß das Bodenbearbeitungsgerät (1) an dem Anbaugestänge (16) durch eine Parallelführung geradlinig höhenbeweglich oder mittels paralleler Schwinghebel (16c) oder durch eine geradlinige Linearführung oder mittels in Langlöchern (16f) geführter Führungsbolzen (12b) höhenbeweglich angeordnet ist.

3. Bodenbearbeitungskombination nach Anspruch 1, dadurch gekennzeichnet, daß das Anbaugestänge (16) in Form eines Schwenkhebels (16g) ausgebildet ist, daß am Tragturm (11) des Bodenbearbeitungsgerätes (1) der Schwenkhebel (16g) angreift, der an dem Koppelgelenk (16b) eines Unterlenkers unmittelbar anlenkbar ist und gegen den Unterlenker und den Tragturm (11) verschwenkbar ist.

4. Bodenbearbeitungskombination nach einem der Ansprüche 1 bis 3, dadurch gekennzeichnet, daß ein erster Federspeicher (10) an dem Bodenbearbeitungsgerät (1) und/oder einer Sämaschine (3,3') und/oder einem weiteren Arbeitsgerät vorgesehen und dessen Federkraft dem Eigengewicht des Bodenbearbeitungsgerätes (1) und/oder der Sämaschine (3,3') und/oder des weiteren Arbeitsgerätes entgegengerichtet ist und diese ganz oder teilweise kompensiert.

5. Bodenbearbeitungskombination nach einem der Ansprüche 1 bis 3, dadurch gekennzeichnet, daß ein erster Federspeicher (10) an dem Bodenbearbeitungsgerät (1) und/oder mindestens eine weitere Feder (10) an der Sämaschine (3,3') und/oder dem weiteren Arbeitsgerät vorgesehen und deren Federkräfte dem Eigengewicht des Bodenbearbeitungsgerätes (1) bzw. der Sämaschine (3,3') bzw. des weiteren Arbeitsgerätes entgegengerichtet sind und diese ganz oder teilweise kompensieren.

6. Bodenbearbeitungskombination nach einem der Ansprüche 1 bis 5, dadurch gekennzeichnet, daß Anschläge (11a,11b) vorgesehen sind, die die freie Höhenbeweglichkeit des Bodenbearbeitungsgerätes (1) begrenzen.

7. Bodenbearbeitungskombination nach Anspruch 6, dadurch gekennzeichnet, daß die Höhenbeweglichkeit nach unten durch eine Kette (11d) begrenzt ist, die an dem Bodenbearbeitungsgerät (1) und dem Anbaugestänge (16) befestigt ist.

8. Bodenbearbeitungskombination nach einem der Ansprüche 6 oder 7, dadurch gekennzeichnet, daß das Bodenbearbeitungsgerät (1) mit mindestens einer Anbauplatte (17) verbindbar ist, an der sich die Anschläge (11a,11b) und Anschlüsse für die Schwinghebel (16c) und die Federn (10) befinden.

9. Bodenbearbeitungskombination nach einem der Ansprüche 3 bis 8, dadurch gekennzeichnet, daß die Federn (10) den Schwenkhebel (16g) belasten und andererseits an dem Tragturm (11) abgestützt sind.

10. Bodenbearbeitungskombination nach einem der Ansprüche 4 bis 8, dadurch gekennzeichnet, daß die Vorspannkräfte der Federn (10) durch jeweils einen Hydraulikzylinder (10f) einstellbar sind und daß der Hydraulikzylinder (10f) an dem Anbaugestänge (16) gelagert und der jeweilige Federspeicher (10) an dem Hydraulikzylinder (10f) eingehängt ist.

11. Bodenbearbeitungskombination nach Anspruch 10, dadurch gekennzeichnet, daß ein Lagesensor (4) vorgesehen ist, der ein Signal erzeugt, wenn sich das Bodenbearbeitungsgerät (1) und die Stützwalze (2) unter dem Einfluß der Federspeicher (10) relativ zueinander bewegen.

12. Bodenbearbeitungskombination nach Anspruch 11, dadurch gekennzeichnet, daß der Lagesensor (4) den Hydraulikzylinder (10f) ansteuert und zwar so, daß die Vorspannkräfte der Federn (10) eine Bewegung des Bodenbearbeitungsgerätes (1) und der Stützwalze (2) relativ zueinander verhindern.

13. Bodenbearbeitungskombination nach einem der Ansprüche 1 bis 12, dadurch gekennzeichnet, daß eine Sämaschine (3,3') aufgesattelt ist.

14. Bodenbearbeitungskombination nach Anspruch 13, dadurch gekennzeichnet, daß die Sämaschine (3,3') an dem Anbaugestänge (16) höhenunbeweglich oder an dem gegenüber dem Anbaugestänge (16) höhenbeweglichen Tragturm (11) starr befestigt ist.

15. Bodenbearbeitungskombination nach einem der Ansprüche 13 oder 14, dadurch gekennzeichnet, daß der Anschlag (10i) an der Sämaschine (3,3') ausgebildet ist.

16. Bodenbearbeitungskombination nach Anspruch 13, dadurch gekennzeichnet, daß die Sämaschine (3,3') an dem Anbaugestänge (16) höhenbeweglich befestigt ist.

17. Bodenbearbeitungskombination nach Anspruch 15 oder 16, dadurch gekennzeichnet, daß die Sämaschine (3,3') auf einer Achse (23) der Stützwalze (2) abgestützt ist.
